(19) **Europäisches Patentamt European Patent Office Office européen des brevets**

(11) **EP 3 298 368 B1**

(12) **FASCICULE DE BREVET EUROPEEN**

(45) Date de publication et mention
de la délivrance du brevet:
**19.08.2020 Bulletin 2020/34**

(51) Int Cl.:
*G01L 1/02* (2006.01)      *G01L 1/08* (2006.01)
*G01L 5/00* (2006.01)      *F15B 11/028* (2006.01)
*F15B 19/00* (2006.01)      *G01L 13/00* (2006.01)
*G01L 15/00* (2006.01)

(21) Numéro de dépôt: **16732232.0**

(22) Date de dépôt: **18.05.2016**

(86) Numéro de dépôt international:
**PCT/EP2016/061117**

(87) Numéro de publication internationale:
**WO 2016/184898 (24.11.2016 Gazette 2016/47)**

(54) **PROCÉDÉ D'ESTIMATION D'UNE FORCE EXTÉRIEURE S'EXERÇANT SUR UN ACTIONNEUR ÉLECTROHYDROSTATIQUE**

VERFAHREN ZUR SCHÄTZUNG EINER EXTERNEN KRAFT, DIE AUF EINEN ELEKTROHYDROSTATISCHEN AKTUATOR WIRKT

METHOD FOR ESTIMATING AN EXTERNAL FORCE ACTING ON AN ELECTROHYDROSTATIC ACTUATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2015 FR 1554437**

(43) Date de publication de la demande:
**28.03.2018 Bulletin 2018/13**

(73) Titulaire: **Safran Electronics & Defense
92100 Boulogne-Billancourt (FR)**

(72) Inventeurs:
• **FELISTE, Nirina**
  **92100 Boulogne-Billancourt (FR)**
• **DELBECQ, Scott**
  **92100 Boulogne-Billancourt (FR)**
• **MERY, Xavier**
  **92100 Boulogne-Billancourt (FR)**

(74) Mandataire: **Regimbeau
20, rue de Chazelles
75847 Paris Cedex 17 (FR)**

(56) Documents cités:
**DE-A1-102006 052 810      DE-A1-102010 007 042**

**Description**

**DOMAINE DE L'INVENTION**

L'invention concerne un procédé d'estimation d'une force extérieure s'exerçant sur un actionneur électrohydrostatique, ainsi qu'une unité de commande programmée pour mettre en œuvre un tel procédé.

**ETAT DE LA TECHNIQUE**

Dans les aéronefs, les gouvernes permettent de modifier l'écoulement de l'air environnant sur la surface de l'aéronef, afin de piloter l'orientation de l'aéronef dans l'espace.

Dans un avion, les gouvernes de vol incluent par exemple des gouvernes de vol primaires qui sont actionnées en phase de vol, et des gouvernes de vol secondaires (becs de bord d'attaque, volets hypersustentateurs) qui ne sont actionnées que lors de certaines phases de vitesse réduite, notamment les phases de décollage et d'atterrissage.

Parmi les gouvernes de vol primaires, les ailerons situés aux extrémités des ailes de l'avion, permettent de contrôler le mouvement de roulis de l'avion.

Ces gouvernes sont montées pivotantes par rapport à la structure de l'aile de l'avion, et chaque gouverne est actionnée mécaniquement par un ou plusieurs actionneur(s) logé(s) dans l'aile de l'avion.

Dans certains avions, les actionneurs utilisés pour actionner les gouvernes sont des actionneurs électrohydrostatiques ou EHA (« ElectroHydrostatic Actuator » en anglais). Ces actionneurs comprennent généralement un moteur électrique, une pompe dédiée et un vérin, ainsi qu'une réserve de fluide autonome. Le moteur hydraulique entraine la pompe qui injecte du fluide dans les chambres du vérin pour déplacer un piston.

Ce type d'actionneur est commandé par un signal électrique de commande généré par une unité de commande électronique. Le signal électrique de commande permet d'ajuster la vitesse de rotation du moteur.

Le document DE 10 2010 007042 décrit un actionneur d'aéronef et des dispositifs de régulation de débit contrôlés par une unité de commande, de sorte à ajuster la portance de l'aéronef.

En fonctionnement, le vérin est soumis à des forces externes générées notamment par les efforts aérodynamiques s'exerçant une surface aérodynamique. La vitesse de rotation du moteur électrique doit par conséquent être ajustée en temps réel afin de permettre au vérin de générer une force de réaction s'opposant aux forces externes auxquelles le vérin est soumis de manière à maintenir la gouverne dans la position de consigne.

Cependant, afin d'éviter un endommagement de la structure de l'avion et/ou de la gouverne, il peut être nécessaire de limiter la force de réaction générée par le vérin. La force de réaction générée par le vérin ne doit pas dépasser une valeur limite prédéterminée généralement définie par les constructeurs d'aéronefs.

Une solution connue pour limiter la force de réaction consiste à corriger le signal électrique de commande reçu par le moteur électrique, lorsqu'un écart de pression détecté dans les chambres du vérin (cet écart de pression étant sensiblement représentatif de la force de réaction générée par le vérin) approche d'une valeur seuil prédéterminée. Le moteur électrique est ainsi commandé de sorte que l'écart de pression dans les chambres du vérin reste inférieur à cette valeur seuil.

Afin de réaliser une telle correction, il est nécessaire de mesurer la pression dans les chambres du vérin au moyen de capteurs de pression. Il serait également envisageable de mesurer directement la force externe s'exerçant sur le vérin au moyen d'un capteur d'effort. Cependant, dans les deux cas, il est nécessaire de prévoir des capteurs spécifiques, ce qui augmente l'encombrement et la masse de l'actionneur et implique l'utilisation d'équipements électroniques additionnels de traitement des signaux de mesure issus de ces capteurs.

Le document DE 10 2006 052810 décrit un procédé d'estimation de la puissance développée par un actionneur à partir d'une tension et d'un courant d'alimentation, et d'une vitesse de rotation du moteur.

**RESUME DE L'INVENTION**

Un but de l'invention est de proposer une solution pour déterminer une force extérieure s'exerçant sur un actionneur électrohydrostatique, sans avoir recours à des capteurs mesurant l'écart de pression dans les chambres du vérin ou la force extérieure.

Ce but est atteint dans le cadre de la présente invention grâce à un procédé d'estimation d'une force extérieure s'exerçant sur un actionneur électrohydrostatique selon la revendication 1.

Le procédé proposé est basée sur l'estimation d'une part de la composante dynamique de l'écart de pression équivalent et d'autre part de la composante statique de l'écart de pression équivalent.

Les deux composantes de l'écart de pression sont estimées séparément à partir de la vitesse de rotation du moteur électrique, de la position du piston et du courant d'alimentation du moteur électrique, ces trois variables étant généralement déjà disponibles pour l'asservissement en position de l'actionneur, ce qui évite l'utilisation de capteurs de pression ou de force additionnels. (De tels capteurs pourraient néanmoins être utilisés pour procurer une consolidation des mesures, si nécessaire.)

La force extérieure s'exerçant sur l'actionneur est ensuite reconstituée de manière simple en combinant les deux composantes issues de l'observateur d'état.

Selon un mode de réalisation possible de l'invention, le procédé comprend des étapes de :

- estimer au moyen d'un deuxième observateur d'état, la composante statique de l'écart de pression équivalent de fluide entre la première chambre et la deuxième chambre, à partir de la vitesse de déplacement du piston estimée par le premier observateur, de la vitesse de rotation du moteur électrique et du courant d'alimentation du moteur électrique.

L'utilisation de deux observateurs d'états en cascade permet d'estimer successivement la composante dynamique de l'écart de pression équivalent et la composante statique de l'écart de pression équivalent, ce qui permet de s'affranchir des difficultés d'estimation de l'écart de pression équivalent à partir d'un seul observateur d'état.

Le procédé proposé peut en outre présenter les caractéristiques suivantes :

- le premier observateur utilise la vitesse de rotation du moteur électrique en tant qu'entrée et la position du piston en tant que sortie mesurée,
- le deuxième observateur utilise la vitesse de rotation du moteur électrique et le courant d'alimentation du moteur électrique en tant qu'entrées, et une variable combinant la vitesse de déplacement du piston et la vitesse de rotation du moteur électrique en tant que sortie mesurée,
- la composante dynamique de l'écart de pression équivalent de fluide est estimée par le premier observateur à partir d'un premier modèle mathématique de l'actionneur dans lequel la force extérieure s'exerçant sur l'actionneur est nulle,
- le premier modèle mathématique est sous la forme :

$$\begin{pmatrix} \dot{x}_{obs} \\ \dot{v}_{obs} \\ \Delta\dot{P}_{dyn\_obs} \end{pmatrix} = \begin{pmatrix} 0 & 1 & 0 \\ 0 & 0 & \mu \\ 0 & -\gamma & 0 \end{pmatrix} \cdot \begin{pmatrix} x_{obs} \\ v_{obs} \\ \Delta P_{dyn\_obs} \end{pmatrix} + \begin{pmatrix} 0 \\ 0 \\ \lambda \end{pmatrix} \cdot \Omega_{moteur} + \begin{pmatrix} k_{11} \\ k_{12} \\ k_{13} \end{pmatrix} \cdot (x_{mes} - x_{obs})$$

où $X_{obs}$ est la position du piston estimée, $v_{obs}$ est la vitesse du piston estimée, $\Delta P_{dyn\_obs}$ est la composante dynamique de l'écart de pression équivalent estimée, $\Omega_{moteur}$ est la vitesse de rotation du moteur électrique, $x_{mes}$ est la position du piston mesurée, $\gamma$, $\mu$, $\lambda$ sont des paramètres constants du modèle et $k_{11}$, $k_{12}$, $k_{13}$ sont des gains du premier observateur réglant une dynamique et une stabilité du premier observateur,

- la deuxième composante statique de pression du fluide est estimée par le deuxième observateur à partir d'un deuxième modèle mathématique de l'actionneur, dans lequel la composante statique de l'écart de pression équivalent de fluide est considérée comme proportionnelle à la force extérieure,
- le deuxième modèle mathématique est sous la forme :

$$\begin{pmatrix} \dot{X}_{1\_obs} \\ \Delta\dot{P}_{stat\_obs} \end{pmatrix} = \begin{pmatrix} 0 & 1 \\ 0 & 0 \end{pmatrix} \cdot \begin{pmatrix} X_{1\_obs} \\ \Delta P_{stat\_obs} \end{pmatrix} + \begin{pmatrix} \alpha \\ 0 \end{pmatrix} \cdot \Omega_{moteur} + \begin{pmatrix} \beta \\ 0 \end{pmatrix} \cdot I_{moteur} + \begin{pmatrix} k_{21} \\ k_{22} \end{pmatrix} \cdot (X_{1\_mes} - X_{1\_obs})$$

où $X_1$ est une variable d'état définie comme $X_1 = \frac{1}{\mu} \cdot \dot{x} + \varepsilon \cdot \Omega_{moteur}$, et dans lequel $X_{1\_obs}$ est la variable d'état $x_1$ estimée, $\Delta P_{stat\_obs}$ est la composante statique d'écart de pression équivalent estimée, $X_{1\_mes}$ est la variable d'état $X_1$ mesurée, $\Omega_{moteur}$ est la vitesse de rotation du moteur électrique, $I_{moteur}$ est le courant d'alimentation du moteur électrique, $\alpha$, $\beta$, $\mu$ et $\varepsilon$ sont des paramètres constants du modèle et $k_{21}$ et $k_{22}$ sont des gains du deuxième observateur réglant une dynamique et une stabilité du deuxième observateur,

- l'observateur est un observateur de type déterministe ou stochastique,
- l'actionneur est un actionneur de gouverne de vol d'un aéronef.

L'invention se rapporte également à un procédé de commande d'un actionneur électrohydrostatique, l'actionneur comprenant un vérin incluant une première chambre, une deuxième chambre et un piston situé entre la première chambre et la deuxième chambre, une pompe propre à injecter du fluide dans les chambres pour commander un déplacement du piston, un moteur électrique entrainant la pompe, au moyen d'une unité de commande exécutant des étapes selon lesquelles :

- l'unité de commande génère un signal de commande pour piloter le moteur électrique,
- l'unité de commande estime la force extérieure s'exerçant sur l'actionneur électrohydrostatique selon un procédé d'estimation tel que défini précédemment,
- l'unité de commande détermine une variable de correction du signal de commande en fonction de la force extérieure estimée, et
- l'unité de commande applique la variable de correction au signal de commande, de manière à limiter la pression du fluide dans les chambres du vérin.

L'invention se rapporte également à une unité de commande pour commander un actionneur électrohydrostatique, l'actionneur comprenant un vérin incluant une première chambre, une deuxième chambre et un piston situé entre la première chambre et la deuxième chambre, une pompe propre à injecter du fluide dans les chambres pour commander un déplacement du piston et un moteur électrique entrainant la pompe, l'unité de commande étant configurée pour générer un signal de commande pour piloter le moteur électrique, estimer la force extérieure s'exerçant sur l'actionneur électrohydrostatique selon un procédé d'estimation tel que défini précédemment, déterminer une variable de correction du signal de commande en fonction de la force extérieure estimée et appliquer la variable de correction au signal de commande, de manière à limiter la pression du fluide dans les chambres du vérin.

L'invention concerne également un actionneur électrohydrostatique et unité de commande associée, l'unité de commande étant conforme à la définition qui précède.

## PRESENTATION DES DESSINS

D'autres caractéristiques et avantages ressortiront encore de la description qui suit, laquelle est purement illustrative et non limitative, et doit être lue en regard des figures annexées, parmi lesquelles :

- la figure 1 représente de manière schématique un actionneur électrohydrostatique et une unité de commande conforme à un mode de réalisation de l'invention,
- la figure 2 représente de manière schématique des étapes d'un procédé de commande de l'actionneur électrohydrostatique mis en œuvre par l'unité de commande,
- la figure 3 représente de manière schématique des étapes d'un procédé d'estimation d'une force extérieure s'exerçant sur l'actionneur électrohydrostatique,
- la figure 4 est un diagramme représentant de manière schématique le procédé d'estimation de la figure 3.

## DESCRIPTION DETAILLEE D'UN MODE DE REALISATION

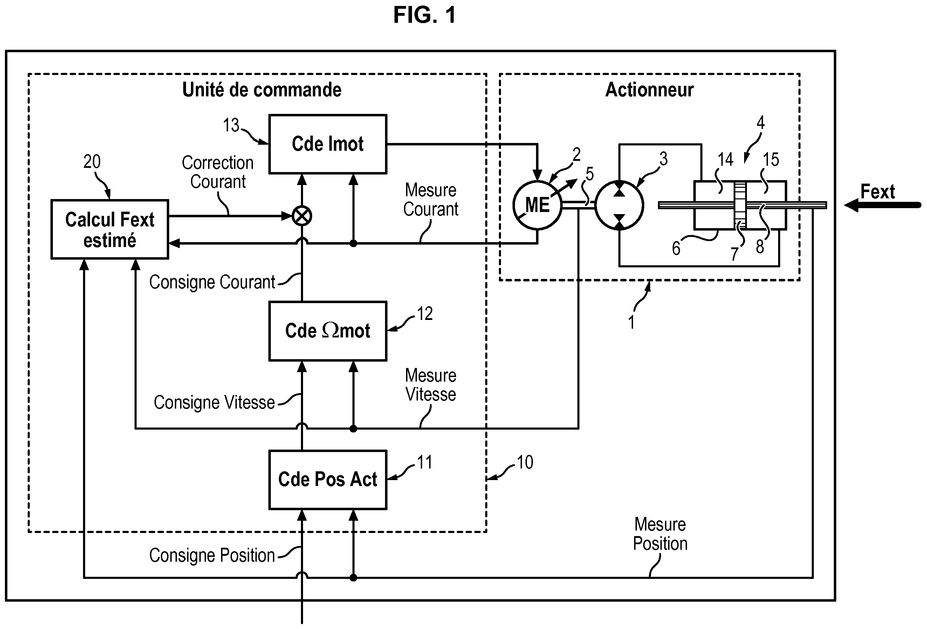

Sur la figure 1, l'actionneur électrohydrostatique 1 représenté comprend un moteur électrique 2, une pompe hydraulique 3 et un vérin 4.

Le moteur électrique 2 est par exemple un moteur synchrone à aimants permanents. Le moteur électrique 2 est piloté par un signal de commande permettant d'ajuster l'intensité du courant d'alimentation circulant dans le moteur 2. Dans le cas d'un moteur synchrone à aimants permanents, le courant d'alimentation est un courant triphasé sinusoïdal.

La pompe hydraulique 3 est par exemple une pompe à cylindrée fixe. La pompe 3 est reliée au rotor du moteur électrique 2 par un arbre de pompe 5, l'arbre de pompe 5 étant entrainé en rotation par le moteur électrique 2.

Le vérin 4 comprend un cylindre 6, un piston 7 propre à être déplacé axialement à l'intérieur du cylindre, et une tige de piston 8 montée fixe sur le piston. Le cylindre 6 et la tige de piston 7 sont destinés par exemple à être reliés respectivement à une structure d'un aéronef et à une gouverne de vol de l'aéronef pour déplacer la gouverne de vol par rapport à la structure de l'aéronef.

Le piston 7 délimite à l'intérieur du cylindre 6 une première chambre 14 et une deuxième chambre 15, les deux chambres s'étendant à l'intérieur du cylindre 6, de part et d'autre du piston 7.

Lorsque la pompe 3 est entrainée en rotation par le moteur électrique 2, la pompe 3 injecte du fluide à l'intérieur de la première chambre 14 et/ou de la deuxième chambre 15, de manière à déplacer le piston 7 à l'intérieur du cylindre 6, et ainsi ajuster la position de la gouverne par rapport à la structure de l'aile.

Le fluide contenu dans la première chambre 14 est à une première pression $P_1$ et le fluide contenu dans la deuxième chambre 15 est à une deuxième pression $P_2$.

L'écart de pression de fluide entre les deux chambres 14 et 15 est défini comme une combinaison linéaire de la première pression $P_1$ et de la deuxième pression $P_2$.

Dans le cas d'un vérin symétrique, l'écart de pression $\Delta P$ est défini comme la différence entre la première pression $P_1$ et de la deuxième pression $P_2$ :

$$\Delta P = P_1 - P_2$$

Dans le cas d'un vérin asymétrique, l'écart de pression considéré est un écart de pression équivalent $\Delta P_{eq}$, calculé comme suit :

$$\Delta P_{eq} = P_1 - \frac{S_2}{S_1} P_2$$

où $S_1$ est la section du vérin du côté de la première chambre 14 et $S_2$ est la section du vérin du côté de la deuxième chambre 15.

Par ailleurs, comme illustré sur la figure 1, l'actionneur électrohydrostatique 1 est soumis à une force extérieure. Plus précisément, la tige 8 du vérin 4 est soumise à une force externe $Fext$. Cette force externe est générée notamment par les efforts aérodynamiques s'exerçant sur la gouverne de vol. La force externe $Fext$ est une force axiale, c'est-à-dire une force dont la direction est parallèle à la direction de déplacement du piston 7 par rapport au cylindre 6.

Le moteur électrique 2 est piloté par une unité de commande 10.

L'unité de commande 10 est propre à recevoir en entrée un signal de consigne de position, un signal de mesure de position, un signal de mesure de vitesse de rotation du moteur électrique (ou rotation de l'arbre de pompe) et un signal de mesure du courant électrique d'alimentation du moteur électrique, et à générer en sortie un signal de commande de tension pour piloter le moteur électrique 2.

Le signal de consigne de position reçu par l'unité de commande 10 est représentatif d'une position souhaitée de la tige (ou du piston), cette position étant par exemple déterminée par le pilote de l'aéronef.

Le signal de mesure de position reçu par l'unité de commande 10 est représentatif d'une position mesurée de la tige (ou du piston). Le signal de mesure de position est généré par un capteur de position intégré au vérin 4, tel qu'un capteur à effet Hall par exemple.

Le signal de mesure de vitesse de rotation du moteur électrique reçu par l'unité de commande 10 est représentatif d'une vitesse de rotation du rotor du moteur électrique (ou de l'arbre de pompe 5). Le signal de mesure de vitesse de rotation est généré par un capteur de vitesse associé à l'arbre de pompe 5 ou au rotor du moteur électrique 2, tel qu'un codeur incrémental par exemple.

Le signal de mesure du courant électrique reçu par l'unité de commande 10 est représentatif d'une intensité du courant électrique alimentant le stator du moteur électrique. Dans le cas d'un moteur synchrone à aimants permanents, le courant est triphasé et l'intensité du courant électrique est la valeur efficace de l'intensité de l'une des phases du courant.

L'unité de commande 10 comprend un premier module de commande 11, un deuxième module de commande 12, un troisième module de commande 13 et un quatrième module de commande 20. Les modules 11 à 13 et 20 peuvent être des modules physiques reliés les uns autres par des moyens de communications appropriés. Les modules 11 à 13 et 20 peuvent alternativement être des blocs d'instructions de programme d'ordinateurs adaptés pour interagir les uns avec les autres lorsqu'ils sont exécutés par un processeur. Ces modules peuvent alors former ensemble un programme d'ordinateur exécutable par au moins un processeur.

Le premier module de commande 11 est propre à générer un signal de consigne de vitesse en fonction du signal de consigne de position et du signal de mesure de position.

Le deuxième module de commande 12 est propre à générer un signal de consigne de courant en fonction du signal de consigne de vitesse et du signal de mesure de vitesse.

Le troisième module de commande 13 est propre à générer le signal de de tension pour piloter le moteur électrique en fonction du signal de consigne de courant et du signal de mesure de courant.

Le quatrième module de commande 20 est propre à générer un signal de correction, pour corriger le signal de consigne de courant, en fonction du signal de signal de mesure de position, du signal de mesure de vitesse et du signal de mesure de courant.

Le signal de correction est appliqué au signal de consigne de courant par un multiplicateur.

L'application du signal de correction permet de limiter l'écart de pression de fluide entre les chambres 14 et 15 du vérin 4, lorsque la force extérieure $F_{ext}$ s'exerçant sur l'actionneur électrohydrostatique 1 devient trop importante.

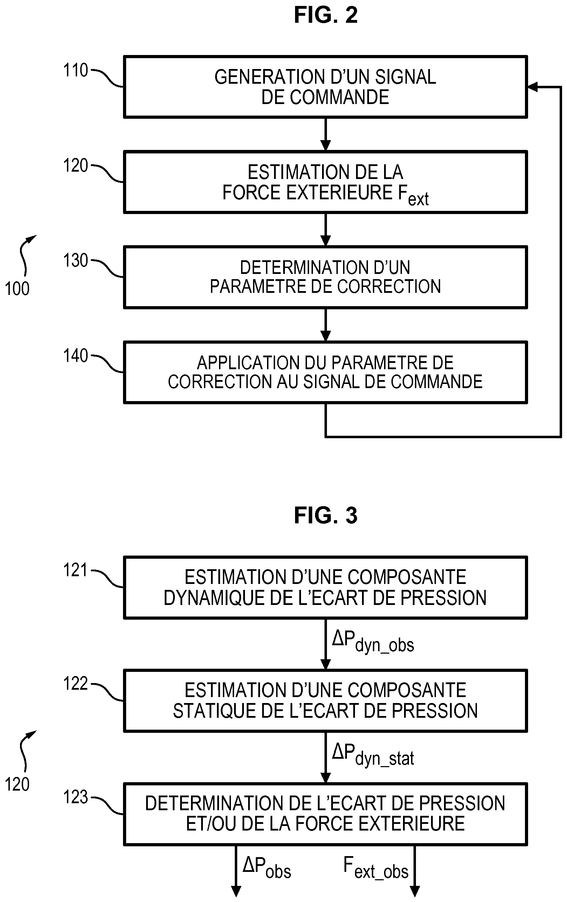

La figure 2 représente de manière schématique des étapes d'un procédé 100 de commande de l'actionneur électrohydrostatique, le procédé 100 étant mis en œuvre par l'unité de commande 10.

Selon une première étape 110, le module de commande 13 génère le signal de commande pour piloter le moteur électrique 2.

Selon une deuxième étape 120, le module de commande 20 estime la force extérieure $F_{ext}$ s'exerçant sur l'actionneur électrohydrostatique 1 en fonction de la vitesse de rotation du moteur électrique $\Omega_{moteur}$, d'une position du piston $x$ et d'un courant d'alimentation $I_{moteur}$ du moteur électrique, la vitesse de rotation du moteur électrique, la position du piston et le courant d'alimentation du moteur étant mesurés par des capteurs.

Selon une troisième étape 130, en fonction de la valeur de la force $F_{ext}$ estimée à la deuxième étape, le module de commande 20 détermine une variable de correction du signal de commande. En particulier, la variable de correction calculée peut être telle que si la force extérieure est inférieure à une valeur seuil, la variable de correction est égal à 1, si la force extérieure est comprise entre la première valeur seuil et une deuxième valeur seuil, a variable de correction décroît linéairement entre 0 et 1, et si la force extérieure est supérieure à la deuxième valeur seuil, la variable de correction est égale à 0.

Selon une quatrième étape 140, le module de commande 20 applique la variable de correction au signal de commande, de manière à limiter l'écart de pression du fluide entre les chambres 14 et 15 du vérin, et ainsi la force de réaction générée par l'actionneur électrohydrostatique.

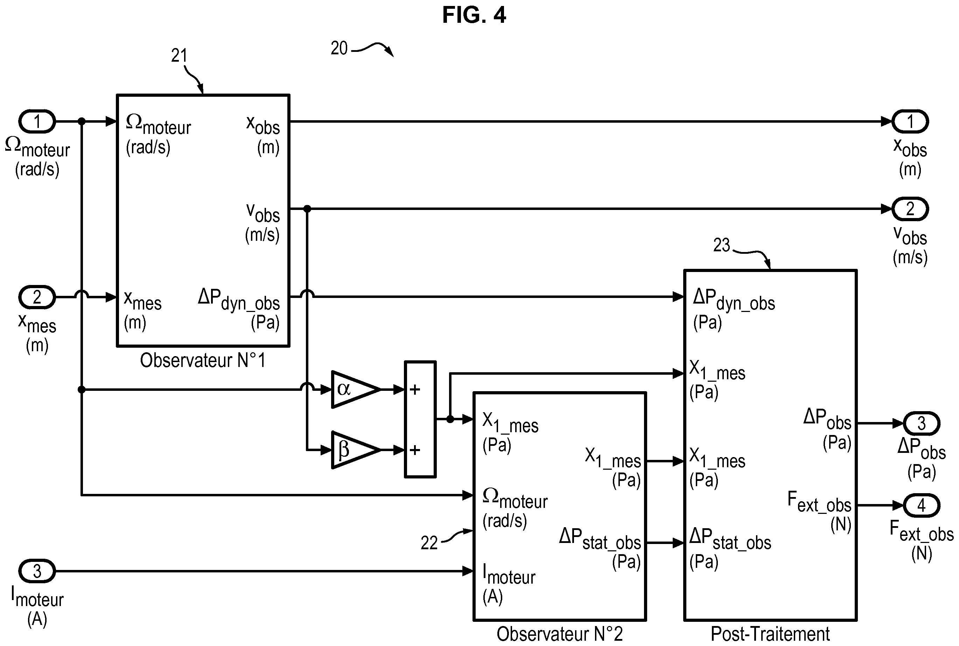

Les figures 3 et 4 représentent de manière schématique un procédé d'estimation de la force extérieur $F_{ext}$ réalisé par le module de commande 20 lors de la deuxième étape 120.

Le procédé d'estimation de la force extérieur $F_{ext}$ met en œuvre un premier observateur d'état 21, un deuxième observateur d'état 22 et un module de post-traitement 23.

Les observateurs d'état 21 et 22 et le module de post-traitement 23 peuvent être des modules physiques reliés les uns aux autres par des moyens de communications appropriés ou des blocs d'instructions de programme d'ordinateurs adaptés pour interagir les uns avec les autres lorsqu'ils sont exécutés par un processeur. Les observateurs d'état 21, 22 et le module de post-traitement 23 peuvent alors former ensemble un programme d'ordinateur exécutable par au moins un processeur.

Concernant les observateurs d'état, on pourra se référer à l'ouvrage « Automatique appliquée », Philippe de Larminat, 2ième édition, 2009, Hermes Science Publications, chapitre 8.3 - Observateurs LTI, pages 209 et suivantes.

On rappelle qu'un observateur d'état permet de reconstruire un état non-mesurable d'un système à partir d'un modèle mathématique du système et de mesures d'autres grandeurs. On suppose par exemple un système ayant une entrée $U$, une sortie (mesurée) $Y$ et un état (non mesuré) $X$ que l'on cherche à estimer.

Un observateur d'état dynamique a la forme :

$$\dot{X}_{obs} = AX_{obs} + BU + L(Y_{mes} - Y_{obs})$$

$$Y_{obs} = CX_{obs}$$

où $Y_{mes}$ est la mesure de la sortie $Y$, $Y_{obs}$ est l'estimation de la sortie $Y$ par l'observateur, $A, B, C$ sont des matrices de paramètres du modèle mathématique du système et $L$ est une matrice de gain choisie de manière à ce que l'erreur sur l'état ($X_{obs}$ - $X$) converge vers 0.

L'observateur peut s'écrire de la manière suivante :

$$\dot{X}_{obs} = (A - LC)X_{obs} + BU + LY_{mes}$$

Les observateurs d'état 21 et 22 peuvent être des observateurs de type déterministe ou stochastique. Un exemple d'observateur d'état de type déterministe est un observateur de Luenberger. Un exemple d'observateur d'état de type stochastique est un observateur de Kalman.

Selon une première étape 121, le module de commande 20 estime au moyen du premier observateur d'état 21, une composante dynamique $\Delta P_{dyn}$ d'un écart de pression de fluide entre les chambres 14 et 15 du vérin 4 et une vitesse $v$ de déplacement du piston 7, à partir de la vitesse de rotation $\Omega_{moteur}$ mesurée du moteur électrique et de la position x mesurée du piston 7.

Le premier observateur 21 utilise la vitesse de rotation du moteur électrique $\Omega_{moteur}$ en tant qu'entrée du système et la position $x$ du piston en tant que sortie.

La composante dynamique d'écart de pression de fluide $\Delta P_{dyn}$ est estimée par le premier observateur 21 à partir d'un premier modèle mathématique.

Dans la mesure où seule la composante dynamique $\Delta P_{dyn}$ de l'écart de pression est estimée à cette étape, le premier modèle mathématique est basé sur l'hypothèse que la force extérieure $F_{ext}$ s'exerçant sur l'actionneur est nulle.

Le premier modèle mathématique déterministe est ainsi sous la forme :

$$
\begin{pmatrix} \dot{x}_{obs} \\ \dot{v}_{obs} \\ \Delta \dot{P}_{dyn\_obs} \end{pmatrix} = \begin{pmatrix} 0 & 1 & 0 \\ 0 & 0 & \mu \\ 0 & -\gamma & 0 \end{pmatrix} \cdot \begin{pmatrix} x_{obs} \\ v_{obs} \\ \Delta P_{dyn\_obs} \end{pmatrix} + \begin{pmatrix} 0 \\ 0 \\ \lambda \end{pmatrix} \cdot \Omega_{moteur} + \begin{pmatrix} k_{11} \\ k_{12} \\ k_{13} \end{pmatrix} \cdot (x_{mes} - x_{obs})
$$

où $x_{obs}$ est la position du piston estimée, $v_{obs}$ est la vitesse du piston estimée, $\Delta P_{dyn\_obs}$ est la composante dynamique de l'écart de pression estimée, $\Omega_{moteur}$ est la vitesse de rotation du moteur électrique, $x_{mes}$ est la position du piston mesurée, $\gamma, \mu, \lambda$ sont des paramètres constants du modèle et $k_{11}, k_{12}, k_{13}$ sont des gains du premier observateur.

Les paramètres $\gamma, \mu, \lambda$ peuvent par exemple être obtenus au moyen de techniques d'identification paramétrique à partir d'essais réels sur l'actionneur.

Les gains $k_{11}, k_{12}, k_{13}$ sont obtenus par des techniques de placement de pôles dans le cas d'un modèle déterministe ou par des techniques d'optimisation d'une fonction de contrainte dans le cas d'un modèle stochastique

Le premier modèle mathématique peut être augmenté pour tenir compte de variables additionnelles, telles que des fuites de pompe par exemple.

Cette première étape 121 conduit à l'obtention d'une valeur estimée $\Delta P_{dyn\_obs}$ de la composante dynamique de l'écart de pression entre les deux chambres 14 et 15 du vérin.

Selon une deuxième étape 122, le module de commande 20 estime au moyen du deuxième observateur d'état 22, une composante statique de l'écart de pression de fluide entre les deux chambres 14 et 15, à partir de la vitesse de déplacement du piston $v$ précédemment estimée par le premier observateur, de la vitesse de rotation $\Omega_{moteur}$ du moteur électrique et d'un courant d'alimentation $I_{moteur}$ du moteur électrique.

Le deuxième observateur 22 utilise la vitesse de rotation du moteur électrique $\Omega_{moteur}$ et le courant d'alimentation du moteur électrique $I_{moteur}$ en tant que variables d'entrée, et une variable d'état $x_1$ combinant la vitesse de déplacement du piston $v$ et la vitesse de rotation du moteur $\Omega_{moteur}$ en tant que variable mesurée.

La composante statique $\Delta P_{stat}$ de l'écart de pression du fluide est estimée par le deuxième observateur 22 à partir d'un deuxième modèle mathématique de l'actionneur.

Dans la mesure où seule la composante statique $\Delta P_{stat}$ de l'écart de pression est estimée à cette étape, le deuxième modèle mathématique est basé sur l'hypothèse que la force extérieure $F_{ext}$ s'exerçant sur l'actionneur électrohydrostatique varie de manière lente et peut donc être assimilée à une force constante. En quasi-statique (aux faibles accélérations du piston), l'écart de pression de fluide entre les chambres 14 et 15 du vérin est proportionnel à la force extérieure $F_{ext}$.

Le deuxième modèle mathématique déterministe est ainsi sous la forme :

$$
\begin{pmatrix} \dot{X}_{1\_obs} \\ \Delta \dot{P}_{stat\_obs} \end{pmatrix} = \begin{pmatrix} 0 & 1 \\ 0 & 0 \end{pmatrix} \cdot \begin{pmatrix} X_{1\_obs} \\ \Delta P_{stat\_obs} \end{pmatrix} + \begin{pmatrix} \alpha \\ 0 \end{pmatrix} \cdot \Omega_{moteur} + \begin{pmatrix} \beta \\ 0 \end{pmatrix} \cdot I_{moteur} + \begin{pmatrix} k_{21} \\ k_{22} \end{pmatrix} \cdot (X_{1\_mes} - X_{1\_obs})
$$

avec

$$
X_1 = \frac{1}{\mu} \cdot \dot{x} + \varepsilon \cdot \Omega_{moteur},
$$

où $X_{1\_obs}$ est la variable d'état $X_1$ estimée, $\Delta P_{stat\_obs}$ est la composante statique d'écart de pression estimée, $X_{1\_mes}$ est la variable d'état $X_1$ mesurée, $\Omega_{moteur}$ est la vitesse de rotation du moteur électrique, $I_{moteur}$ est le courant d'alimentation du moteur électrique, $\alpha, \beta, \mu$ et $\varepsilon$ sont des paramètres constants du modèle et $k_{21}$ et $k_{22}$ sont des gains du deuxième observateur.

Les paramètres $\alpha, \beta, \mu$ et $\varepsilon$ peuvent par exemple être obtenus au moyen de techniques d'identification paramétrique à partir d'essais réels sur l'actionneur.

Les gains $k_{21}$ et $k_{22}$ sont obtenus par des techniques de placement de pôles dans le cas d'un modèle déterministe ou par des techniques d'optimisation d'une fonction de contrainte dans le cas d'un modèle stochastique.

Le deuxième modèle mathématique peut également être augmenté pour tenir compte de variables additionnelles, telles que des fuites de pompe par exemple.

Selon une troisième étape 123, le module de commande 20 détermine par le biais du module de post-traitement 23, un écart de pression estimé $\Delta P_{obs}$ entre les chambres de l'actionneur. L'écart de pression estimé $\Delta P_{obs}$ est déterminé comme la somme de la composante dynamique estimée par le premier observateur et de la composante statique estimée par le deuxième observateur :

$$\Delta P_{obs} = \Delta P_{dyn\_obs} + \Delta P_{stat\_obs}$$

Le module de commande 20 détermine également la force extérieure estimée $F_{ext\_obs}$ s'exerçant sur l'actionneur, à partir de l'écart de pression estimé.

Dans le cas d'un vérin symétrique, la force extérieure est déterminée comme suit :

$$F_{ext\_obs} = \Delta P_{obs} \times S_{vérin}$$

où $F_{ext\_obs}$ est la force extérieure estimée, $\Delta P_{obs}$ est l'écart de pression estimé, et $S_{vérin}$ est l'aire de la section transversale du vérin.

Dans le cas d'un vérin non-symétrique, la force extérieure est déterminée comme suit :

$$F_{ext\_obs} = \Delta P_{eq\_obs} \times S_1$$

avec

$$\Delta P_{eq} = P_1 - \frac{S_2}{S_1} P_2$$

où $S_1$ est la section du vérin du côté de la première chambre 14 et $S_2$ est la section du vérin du côté de la deuxième chambre 15.

Autrement dit, la force extérieure $F_{ext}$ est estimée comme une combinaison linéaire de la composante dynamique d'écart de pression estimée par le premier observateur 21 et de la composante statique d'écart de pression estimée par le deuxième observateur 22.

La force extérieure s'exerçant sur l'actionneur est ainsi reconstituée de manière simple en combinant les deux composantes issues des deux observateurs d'état 21 et 22.

## Revendications

1. Procédé (120) d'estimation d'une force extérieure s'exerçant sur un actionneur électrohydrostatique (1), l'actionneur comprenant un vérin (4) incluant une première chambre (14), une deuxième chambre (15) et un piston (7) situé entre la première chambre (14) et la deuxième chambre (15), une pompe (3) propre à injecter du fluide dans les chambres (14, 15) pour commander un déplacement du piston (7), et un moteur électrique (2) entrainant la pompe (3), la force extérieure étant une force axiale s'exerçant sur le vérin (4), **caractérisé en ce que** le procédé comprend les étapes suivantes :

   - (121) estimer au moyen d'un premier observateur d'état (21), une composante dynamique d'un écart de pression équivalent de fluide entre la première chambre (14) et la deuxième chambre (15) et une vitesse de déplacement du piston (7), à partir d'une vitesse de rotation du moteur électrique (2) et d'une position du piston (7),
   - (122) estimer au moyen d'un deuxième observateur d'état (22), la composante statique de l'écart de pression équivalent de fluide entre la première chambre (14) et la deuxième chambre (15), à partir de la vitesse de déplacement du piston (7) estimée par le premier observateur (21), de la vitesse de rotation du moteur électrique (2) et du courant d'alimentation du moteur électrique (2) ;
   - (123) estimer la force extérieure au moyen d'un module de post-traitement (23) comme une combinaison de la composante dynamique et de la composante statique de l'écart de pression de fluide estimées.

2. Procédé selon la revendication 1 dans lequel la composante dynamique de l'écart de pression équivalent de fluide est estimée par le premier observateur (21) à partir d'un premier modèle mathématique de l'actionneur (1) dans lequel la force extérieure s'exerçant sur l'actionneur est nulle.

**3.** Procédé selon la revendication 2 dans lequel le premier modèle mathématique est sous la forme :

$$\begin{pmatrix} \dot{x}_{obs} \\ \dot{v}_{obs} \\ \Delta\dot{P}_{dyn\_obs} \end{pmatrix} = \begin{pmatrix} 0 & 1 & 0 \\ 0 & 0 & \mu \\ 0 & -\gamma & 0 \end{pmatrix} \cdot \begin{pmatrix} x_{obs} \\ v_{obs} \\ \Delta P_{dyn\_obs} \end{pmatrix} + \begin{pmatrix} 0 \\ 0 \\ \lambda \end{pmatrix} \cdot \Omega_{moteur} + \begin{pmatrix} k_{11} \\ k_{12} \\ k_{13} \end{pmatrix} \cdot (x_{mes} - x_{obs})$$

où $x_{obs}$ est la position du piston estimée, $v_{obs}$ est la vitesse du piston estimée, $\Delta P_{dyn\_obs}$ est la composante dynamique de l'écart de pression équivalent estimée, $\Omega_{moteur}$ est la vitesse de rotation du moteur électrique, $x_{mes}$ est la position du piston mesurée, $\gamma$, $\mu$, $\lambda$ sont des paramètres constants du modèle et $k_{11}$, $k_{12}$, $k_{13}$ sont des gains du premier observateur réglant une dynamique et une stabilité du premier observateur.

**4.** Procédé selon l'une des revendications 1 à 3, dans lequel la deuxième composante statique de l'écart de pression équivalent du fluide est estimée par le deuxième observateur (22) à partir d'un deuxième modèle mathématique de l'actionneur (1), dans lequel la composante statique de l'écart de pression de fluide est considérée comme proportionnelle à la force extérieure.

**5.** Procédé selon la revendication 4, dans lequel le deuxième modèle mathématique est sous la forme :

$$\begin{pmatrix} \dot{X}_{1\_obs} \\ \Delta\dot{P}_{stat\_obs} \end{pmatrix} = \begin{pmatrix} 0 & 1 \\ 0 & 0 \end{pmatrix} \cdot \begin{pmatrix} X_{1\_obs} \\ \Delta P_{stat\_obs} \end{pmatrix} + \begin{pmatrix} \alpha \\ 0 \end{pmatrix} \cdot \Omega_{moteur} + \begin{pmatrix} \beta \\ 0 \end{pmatrix} \cdot I_{moteur} + \begin{pmatrix} k_{21} \\ k_{22} \end{pmatrix} \cdot (X_{1\_mes} - X_{1\_obs})$$

où $X_1$ est une variable d'état définie comme $X_1 = \dfrac{1}{\mu} \cdot \dot{x} + \varepsilon \cdot \Omega_{moteur}$, et dans lequel $X_{1\_obs}$ est la variable d'état $X_1$ estimée, $\Delta P_{stat\_obs}$ est la composante statique d'écart de pression équivalent estimée, $X_{1\_mes}$ est la variable d'état $X_1$ mesurée, $\Omega_{moteur}$ est la vitesse de rotation du moteur électrique, $I_{moteur}$ est le courant d'alimentation du moteur électrique, $\alpha$, $\beta$, $\mu$ et $\varepsilon$ sont des paramètres constants du modèle et $k_{21}$ et $k_{22}$ sont des gains du deuxième observateur (22) réglant une dynamique et une stabilité du deuxième observateur.

**6.** Procédé selon l'une des revendications 1 à 5, dans lequel l'observateur est un observateur de type déterministe ou stochastique.

**7.** Procédé selon l'une des revendications 1 à 6, dans lequel l'actionneur (1) est un actionneur de gouverne de vol d'un aéronef.

**8.** Procédé (100) de commande d'un actionneur électrohydrostatique (1), l'actionneur (1) comprenant un vérin (4) incluant une première chambre (14), une deuxième chambre (15) et un piston (7) situé entre la première chambre (14) et la deuxième chambre (15), une pompe (3) propre à injecter du fluide dans les chambres (14, 15) pour commander un déplacement du piston (7), un moteur électrique (2) entrainant la pompe (3), au moyen d'une unité de commande (10) exécutant des étapes selon lesquelles :

- (110) l'unité de commande (10) génère un signal de commande pour piloter le moteur électrique (2),
- (120) l'unité de commande (10) estime la force extérieure s'exerçant sur l'actionneur électrohydrostatique (1) selon un procédé d'estimation conforme à l'une des revendications 1 à 8,
- (130) l'unité de commande (10) détermine une variable de correction du signal de commande en fonction de la force extérieure estimée, et
- (140) l'unité de commande applique la variable de correction au signal de commande, de manière à limiter l'écart de pression du fluide entre les chambres (14, 15) du vérin (4).

**9.** Unité de commande (10) pour commander un actionneur électrohydrostatique (1), l'actionneur (1) comprenant un vérin (4) incluant une première chambre (14), une deuxième chambre (15) et un piston (7) situé entre la première chambre (14) et la deuxième chambre (15), une pompe (3) propre à injecter du fluide dans les chambres (14, 15) pour commander un déplacement du piston (7) et un moteur électrique (2) entrainant la pompe (3), l'unité de commande (10) étant configurée pour générer un signal de commande pour piloter le moteur électrique (2), estimer la force extérieure s'exerçant sur l'actionneur électrohydrostatique (1) selon un procédé d'estimation conforme à l'une des revendications 1 à 7, déterminer une variable de correction du signal de commande en fonction de la force extérieure estimée et appliquer la variable de correction au signal de commande, de manière à limiter l'écart de pression du fluide entre les chambres (14, 15) du vérin (4).

10. Actionneur électrohydrostatique (1) et unité de commande (10) associée, l'unité de commande étant conforme à la revendication 9.

**Patentansprüche**

1. Verfahren (120) zur Schätzung einer externen Kraft, die auf einen elektrohydrostatischen Aktuator (1) wirkt, wobei der Aktuator einen Zylinder (4) umfasst, der eine erste Kammer (14), eine zweite Kammer (15) und einen Kolben (7) einschließt, der sich zwischen der ersten Kammer (14) und der zweiten Kammer (15) befindet, eine Pumpe (3), die geeignet ist, Fluid in die Kammern (14, 15) einzuspritzen, um eine Bewegung des Kolbens (7) zu steuern, und einen Elektromotor (2), der die Pumpe (3) antreibt, wobei die externe Kraft eine Axialkraft ist, die auf den Zylinder (4) wirkt,
   **dadurch gekennzeichnet, dass** das Verfahren folgende Schritte umfasst:

   - (121) Schätzen, mittels eines ersten Zustandsbeobachters (21), einer dynamischen Komponente einer äquivalenten Druckdifferenz des Fluids zwischen der ersten Kammer (14) und der zweiten Kammer (15) und einer Bewegungsgeschwindigkeit des Kolbens (7) ausgehend von einer Drehzahl des Elektromotors (2) und von einer Position des Kolbens (7),
   - (122) Schätzen, mittels eines zweiten Zustandsbeobachters (22), einer statischen Komponente der äquivalenten Druckdifferenz des Fluids zwischen der ersten Kammer (14) und der zweiten Kammer (15) ausgehend von der Bewegungsgeschwindigkeit des Kolbens (7), die von dem ersten Beobachter (21) geschätzt wird, von der Drehzahl des Elektromotors (2) und von dem Versorgungsstrom des Elektromotors (2);
   - (123) Schätzen der externen Kraft mittels eines Nachbearbeitungsmoduls (23) als eine Kombination der geschätzten dynamischen Komponente und statischen Komponente der Druckdifferenz des Fluids.

2. Verfahren nach Anspruch 1, wobei die dynamische Komponente der äquivalenten Druckdifferenz des Fluids von dem ersten Beobachter (21) ausgehend von einem ersten mathematischen Modell des Aktuators (1) geschätzt wird, wobei die externe Kraft, die auf den Aktuator wirkt, null ist.

3. Verfahren nach Anspruch 2, wobei das erste mathematische Modell folgende Form aufweist:

$$\begin{pmatrix} \dot{x}_{obs} \\ \dot{v}_{obs} \\ \Delta \dot{P}_{dyn\_obs} \end{pmatrix} = \begin{pmatrix} 0 & 1 & 0 \\ 0 & 0 & \mu \\ 0 & -\gamma & 0 \end{pmatrix} . \begin{pmatrix} x_{obs} \\ v_{obs} \\ \Delta P_{dyn\_obs} \end{pmatrix} + \begin{pmatrix} 0 \\ 0 \\ \lambda \end{pmatrix} . \Omega_{moteur} + \begin{pmatrix} k_{11} \\ k_{12} \\ k_{13} \end{pmatrix} . (x_{mes} - x_{obs})$$

wobei $x_{obs}$ die geschätzte Position des Kolbens ist, $v_{obs}$ die geschätzte Geschwindigkeit des Kolbens ist, $\Delta P_{dyn\_obs}$ die geschätzte dynamische Komponente der äquivalenten Druckdifferenz ist, $\Omega_{moteur}$ die Drehzahl des Elektromotors ist, $x_{mes}$ die gemessene Position des Kolbens ist, $\gamma$, $\mu$, $\lambda$ konstante Parameter des Modells sind und $k_{11}$, $k_{12}$, $k_{13}$ Verstärkungen des ersten Beobachters sind, die eine Dynamik und eine Stabilität des ersten Beobachters regeln.

4. Verfahren nach einem der Ansprüche 1 bis 3, wobei die zweite statische Komponente der äquivalenten Druckdifferenz des Fluids von dem zweiten Beobachter (22) ausgehend von einem zweiten mathematischen Modell des Aktuators (1) geschätzt wird, wobei die statische Komponente der Druckdifferenz des Fluids als proportional zu der externen Kraft gilt.

5. Verfahren nach Anspruch 4, wobei das zweite mathematische Modell folgende Form aufweist:

$$\begin{pmatrix} \dot{X}_{1\_obs} \\ \Delta \dot{P}_{stat\_obs} \end{pmatrix} = \begin{pmatrix} 0 & 1 \\ 0 & 0 \end{pmatrix} \cdot \begin{pmatrix} X_{1\_obs} \\ \Delta P_{stat\_obs} \end{pmatrix} + \begin{pmatrix} \alpha \\ 0 \end{pmatrix} \Omega_{moteur} + \begin{pmatrix} \beta \\ 0 \end{pmatrix} I_{moteur} + \begin{pmatrix} k_{21} \\ k_{22} \end{pmatrix} \cdot \left( X_{1\_mes} - X_{1\_obs} \right)$$

wobei $x_1$ eine Zustandsvariable ist, definiert als $\quad X_1 = \dfrac{1}{\mu} \cdot \dot{x} + \varepsilon \cdot \Omega_{moteur} \quad$ und

wobei $X_{1\_obs}$ die geschätzte Zustandsvariable $X_1$ ist, $\Delta P_{stat\_obs}$ die geschätzte statische Komponente der äquivalenten Druckdifferenz ist, $X_{1\_mes}$ die gemessene Zustandsvariable $X_1$ ist, $\Omega_{moteur}$ die Drehzahl des Elektromotors ist, $I_{moteur}$ der Versorgungsstrom des Elektromotors ist, $\alpha$, $\beta$, $\mu$ und $\varepsilon$ konstante Parameter des Modells sind und $k_{21}$ und $k_{22}$ Verstärkungen des zweiten Beobachters (22) sind, die eine Dynamik und eine Stabilität des zweiten Beobachters regeln.

6. Verfahren nach einem der Ansprüche 1 bis 5, wobei der Beobachter ein Beobachter deterministischer oder stochastischer Art ist.

7. Verfahren nach einem der Ansprüche 1 bis 6, wobei der Aktuator (1) ein Aktuator eines Flugsteuerruders eines Luftfahrzeugs ist.

8. Verfahren (100) zum Steuern eines elektrohydrostatischen Aktuators (1), wobei der Aktuator (1) einen Zylinder (4) umfasst, der eine erste Kammer (14), eine zweite Kammer (15) und einen Kolben (7) einschließt, der sich zwischen der ersten Kammer (14) und der zweiten Kammer (15) befindet, eine Pumpe (3), die geeignet ist, Fluid in die Kammern (14, 15) einzuspritzen, um eine Bewegung des Kolbens (7) zu steuern, und einen Elektromotor (2), der die Pumpe (3) antreibt, mittels einer Steuereinheit (10), die Schritte ausführt, wonach:

   - (110) die Steuereinheit (10) ein Steuersignal erzeugt, um den Elektromotor (2) anzusteuern,
   - (120) die Steuereinheit (10) die externe Kraft, die auf den elektrohydrostatischen Aktuator (1) wirkt, gemäß einem Schätzungsverfahren nach einem der Ansprüche 1 bis 8 schätzt,
   - (130) die Steuereinheit (10) eine Korrekturvariable des Steuersignals in Abhängigkeit von der geschätzten externen Kraft bestimmt und
   - (140) die Steuereinheit die Korrekturvariable auf das Steuersignal anwendet, sodass die Druckdifferenz des Fluids zwischen den Kammern (14, 15) des Zylinders (4) begrenzt wird.

9. Steuereinheit (10) zum Steuern eines elektrohydrostatischen Aktuators (1), wobei der Aktuator (1) einen Zylinder (4) umfasst, der eine erste Kammer (14), eine zweite Kammer (15) und einen Kolben (7) einschließt, der sich zwischen der ersten Kammer (14) und der zweiten Kammer (15) befindet, eine Pumpe (3), die geeignet ist, Fluid in die Kammern (14, 15) einzuspritzen, um eine Bewegung des Kolbens (7) zu steuern, und einen Elektromotor (2), der die Pumpe (3) antreibt, wobei die Steuereinheit (10) ausgestaltet ist, ein Steuersignal zu erzeugen, um den Elektromotor (2) anzusteuern, die externe Kraft, die auf den elektrohydrostatischen Aktuator (1) wirkt, gemäß einem Schätzungsverfahren nach einem der Ansprüche 1 bis 7 zu schätzen, eine Korrekturvariable des Steuersignals in Abhängigkeit von der geschätzten externen Kraft zu bestimmen und die Korrekturvariable auf das Steuersignal anzuwenden, sodass die Druckdifferenz des Fluids zwischen den Kammern (14, 15) des Zylinders (4) begrenzt wird.

10. Elektrohydrostatischer Aktuator (1) und zugehörige Steuereinheit (10), wobei die Steuereinheit dem Anspruch 9 entspricht.

## Claims

1. A method (120) for estimating an external force acting on an electrohydrostatic actuator (1), the actuator comprising a cylinder (4) including a first chamber (14), a second chamber (15) and a piston (7) located between the first chamber (14) and the second chamber (15), a pump (3) suitable for injecting fluid into the chambers (14, 15) to control a displacement of the piston (7), and an electric motor (2) driving the pump (3), the external force being an axial force acting on the cylinder (4),
**characterised in that** the method comprises the following steps:

- (121) estimating by means of a first state observer (21), a dynamic component of an equivalent pressure difference of fluid between the first chamber (14) and the second chamber (15) and a speed of displacement of the piston (7), from a speed of rotation of the electric motor (2) and from a position of the piston (7),
- (122) estimating by means of a second state observer (22), the static component of the equivalent pressure difference of fluid between the first chamber (14) and the second chamber (15), from the speed of displacement of the piston (7) estimated by the first observer (21), the speed of rotation of the electric motor (2) and the supply current of the electric motor (2) ;
- (123) estimating the external force by means of a post-processing module (23) as a combination of the dynamic component and the static component of the estimated fluid pressure difference.

2. The method according to claim 1 wherein the dynamic component of the equivalent pressure difference of fluid is estimated by the first observer (21) from a first mathematical model of the actuator (1) wherein the external force acting on the actuator is zero.

3. The method according to claim 2 wherein the first mathematical model is in the form:

$$\begin{pmatrix} \dot{x}_{obs} \\ \dot{v}_{obs} \\ \Delta \dot{P}_{dyn\_obs} \end{pmatrix} = \begin{pmatrix} 0 & 1 & 0 \\ 0 & 0 & \mu \\ 0 & -\gamma & 0 \end{pmatrix} \cdot \begin{pmatrix} x_{obs} \\ v_{obs} \\ \Delta P_{dyn\_obs} \end{pmatrix} + \begin{pmatrix} 0 \\ 0 \\ \lambda \end{pmatrix} \Omega_{motor} + \begin{pmatrix} k_{11} \\ k_{12} \\ k_{13} \end{pmatrix} \cdot (x_{mes} - x_{obs})$$

where $x_{obs}$ is the estimated piston position, $v_{obs}$ is the estimated piston speed, $\Delta P_{dyn\_obs}$ is the dynamic component of the estimated equivalent pressure difference, $\Omega_{motor}$ is the speed of rotation of the electric motor, $x_{mes}$ is the measured piston position, $\gamma$, $\mu$, $\lambda$ are constant parameters of the model and $k_{11}$, $k_{12}$, $k_{13}$ are gains of the first observer regulating a dynamics and a stability of the first observer.

4. The method according to one of claims 1 to 3, wherein the second static component of the equivalent pressure difference of the fluid is estimated by the second observer (22) from a second mathematical model of the actuator (1), wherein the static component of the fluid pressure difference is considered to be proportional to the external force.

5. The method according to claim 4, wherein the second mathematical model is in the form:

$$\begin{pmatrix} \dot{X}_{1\_obs} \\ \Delta \dot{P}_{stat\_obs} \end{pmatrix} = \begin{pmatrix} 0 & 1 \\ 0 & 0 \end{pmatrix} \begin{pmatrix} X_{1\_obs} \\ \Delta P_{stat\_obs} \end{pmatrix} + \begin{pmatrix} \alpha \\ 0 \end{pmatrix} \Omega_{motor} + \begin{pmatrix} \beta \\ 0 \end{pmatrix} I_{motor} + \begin{pmatrix} k_{21} \\ k_{22} \end{pmatrix} (X_{1\_mes} - X_{1\_obs})$$

where $X_1$ is a state variable defined as $X_1 = \frac{1}{\mu} \cdot \dot{x} + \varepsilon.\Omega_{motor}$, and wherein $X_{1\_obs}$ is the estimated state variable $X_1$, $\Delta_{stat\_obs}$ is the static component of the estimated equivalent pressure difference, $X_{1\_mes}$ is the measured state variable $X_1$, $\Omega_{motor}$ is the speed of rotation of the electric motor, $I_{motor}$ is the supply current of the electric motor, $\alpha$, $\beta$, $\mu$ and $\varepsilon$ are constant parameters of the model and $k_{21}$ and $k_{22}$ are gains of the second observer (22) regulating a dynamics and a stability of the second observer.

6. The method according to one of claims 1 to 5, wherein the observer is a deterministic or stochastic type observer.

7. The method according to one of claims 1 to 6, wherein the actuator (1) is a flight control actuator of an aircraft.

8. The method (100) for controlling an electrohydrostatic actuator (1), the actuator (1) comprising a cylinder (4) including a first chamber (14), a second chamber (15) and a piston (7) located between the first chamber (14) and the second chamber (15), a pump (3) suitable for injecting fluid into the chambers (14, 15) to control a displacement of the piston (7), an electric motor (2) driving the pump (3), by means of a control unit (10) executing steps whereby:

- (110) the control unit (10) generates a control signal to pilot the electric motor (2),
- (120) the control unit (10) estimates the external force acting on the electrohydrostatic actuator (1) according to an estimation method in accordance with one of claims 1 to 8,

- (130) the control unit (10) determines a control signal correction variable according to the estimated external force, and
- (140) the control unit applies the correction variable to the control signal, so as to limit the difference in fluid pressure between the chambers (14, 15) of the cylinder (4).

9. A control unit (10) for controlling an electrohydrostatic actuator (1), the actuator (1) comprising a cylinder (4) including a first chamber (14), a second chamber (15) and a piston (7) located between the first chamber (14) and the second chamber (15), a pump (3) suitable for injecting fluid into the chambers (14, 15) to control a displacement of the piston (7) and an electric motor (2) driving the pump (3), the control unit (10) being configured to generate a control signal to pilot the electric motor (2), estimate the external force acting on the electrohydrostatic actuator (1) according to an estimation method in accordance with one of claims 1 to 7, determine a correction variable of the control signal according to the estimated external force and apply the correction variable to the control signal, so as to limit the pressure difference of the fluid between the chambers (14, 15) of the cylinder (4).

10. An electrohydrostatic actuator (1) and an associated control unit (10), the control unit being in accordance with claim 9.

**FIG. 1**

## FIG. 2

```
110 ── ┌──────────────────────────────┐
        │   GENERATION D'UN SIGNAL       │ ◄─┐
        │      DE COMMANDE               │   │
        └──────────────────────────────┘   │
                     │                       │
120 ── ┌──────────────────────────────┐   │
        │      ESTIMATION DE LA          │   │
        │   FORCE EXTERIEURE $F_{ext}$    │   │
        └──────────────────────────────┘   │
                     │                       │
130 ── ┌──────────────────────────────┐   │
        │      DETERMINATION D'UN        │   │
        │   PARAMETRE DE CORRECTION      │   │
        └──────────────────────────────┘   │
                     │                       │
140 ── ┌──────────────────────────────┐   │
        │   APPLICATION DU PARAMETRE DE  │   │
        │  CORRECTION AU SIGNAL DE COMMANDE │
        └──────────────────────────────┘   │
                     └───────────────────────┘
```

100

## FIG. 3

```
121 ── ┌──────────────────────────────┐
        │   ESTIMATION D'UNE COMPOSANTE  │
        │  DYNAMIQUE DE L'ECART DE PRESSION │
        └──────────────────────────────┘
                     │ $\Delta P_{dyn\_obs}$
122 ── ┌──────────────────────────────┐
        │   ESTIMATION D'UNE COMPOSANTE  │
        │  STATIQUE DE L'ECART DE PRESSION │
        └──────────────────────────────┘
                     │ $\Delta P_{dyn\_stat}$
123 ── ┌──────────────────────────────┐
        │  DETERMINATION DE L'ECART DE PRESSION │
        │   ET/OU DE LA FORCE EXTERIEURE │
        └──────────────────────────────┘
             │ $\Delta P_{obs}$      $F_{ext\_obs}$ │
```

120

**FIG. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102010007042

- DE 102006052810

**Littérature non-brevet citée dans la description**

- **PHILIPPE DE LARMINAT.** Automatique appliquée. Hermes Science Publications, 2009, 209